# EUROPÄISCHE PATENTSCHRIFT

(11) **EP 0 591 096 B1**
(45) Veröffentlichungstag und Bekanntmachung des Hinweises auf die Patenterteilung: **14.06.1995**
(21) Anmeldenummer: 93810493.2
(22) Anmeldetag: 12.07.1993
(51) Int. Cl.: B25B 23/147, B23B 49/00, B25B 23/00

(54) **Handschraubgerät mit Tiefenanschlag**
Screwing handtool with depth gauge
Outil à main de vissage avec butée de profondeur

(30) Priorität: 02.10.1992 DE 4233150
(43) Veröffentlichungstag der Anmeldung: 06.04.1994
(73) Patentinhaber: HILTI Aktiengesellschaft, 9494 Schaan (LI)
(72) Erfinder: Duerr, Paul, CH-9631 Ulisbach (CH); Daubinger, Gerd, D-8000 München 45 (DE)
(74) Vertreter: Wildi, Roland

(56) Entgegenhaltungen:
- DE-A- 1 752 984
- DE-A- 3 912 991
- FR-A- 2 350 162
- PATENT ABSTRACTS OF JAPAN vol. 9, no. 103 (M-377)(1826) 8. Mai 1985 & JP-A-59 227 306 (FUJITSU K.K.) 20. Dezember 1984

## Beschreibung

Die Erfindung betrifft ein Handschraub- und/oder Handbohrgerät mit einem Gehäuse, in dem ein Antriebsmotor für ein Antriebswerkzeug wie Schraubwerkzeug oder Bohrer angeordnet ist und mit einer am Gehäuse angeordneten Schaltvorrichtung für einen das Abschalten des Antriebsmotors bewirkenden Schalter, die einen axial versetzbaren Tiefenanschlag, ein vom Tiefenanschlag axial verschiebbares, mit dem Schalter zusammenwirkendes Schaltelement und ein den Tiefenanschlag und das Schaltelement in die Grundstellung drückendes Federelement aufweist.

Beim oberflächenbündigen Eindrehen von Schrauben mittels elektrisch betriebenen Handschraubgeräten ist es aus der DE-OS 1 752 984 bekannt, dass der Antriebsmotor für das Arbeitswerkzeug beim Erreichen einer bestimmten Einschraubtiefe automatisch abschaltet. Die automatische Abschaltvorrichtung besteht dabei im wesentlichen aus einem am Gehäuse des Handschraubgerätes gelagerten, axial versetzbaren Tiefenanschlag, der mit einem ebenfalls axial versetzbaren Schaltelement verbunden ist, einem Schalter und einem, den Tiefenanschlag und das Schaltelement in die Grundstellung drückendes Federelement. Der Schalter steht in elektrischer Verbindung mit der Steuerung des Antriebsmotors.

Der Eindrehvorgang einer Schraube mit Hilfe des Handschraubgerätes erfolgt, bis die setzrichtungsseitige Stirnseite des Tiefenanschlages an der Oberfläche eines Aufnahmematerials zur Anlage kommt, eine axiale Versetzung erfährt und auf diese Weise über das Schaltelement den Schalter betätigt. Muss die Schraube wieder herausgedreht werden, so kann dies nur dann erfolgen, wenn der Tiefenanschlag und das Schaltelement zueinander derart versetzt werden, dass der Tiefenanschlag das Aufnahmematerial nicht mehr berührt, wenn das Arbeitswerkzeug in die Drehmitnahmemittel der Schraube eingreift. Eine axiale Verschiebung des Schaltelementes und eine Betätigung des Schalters wird auf diese Weise verhindert.

Da der Tiefenanschlag gegenüber dem Schaltelement mittels einer Klemmvorrichtung axial festgelegt ist, muss ein Lösen dieser Klemmverbindung stattfinden, um den Tiefenanschlag gegenüber dem Schaltelement axial zu verschieben.

Nachteilig bei einer derartigen Schaltvorrichtung wirkt sich der Umstand aus, dass nach dem Herausdrehen einer Schraube der Tiefenanschlag gegenüber dem Schaltelement wieder "eingerichtet" werden muss und zwar so, dass ein oberflächenbündiges Eindrehen der nächsten Schraube wieder gewährleistet ist. Diese neuerliche Einrichtung des Tiefenanschlages ist nicht nur sehr zeitraubend, sondern auch arbeitsintensiv.

Der Erfindung liegt die Aufgabe zugrunde, ein Handschraubgerät derart auszubilden, dass die Schaltvorrichtung kurzfristig und ohne grossen Einstellaufwand ausser Funktion gesetzt werden kann.

Erfindungsgemäss wird dies dadurch erreicht, dass in der von Tiefenanschlag und Schaltelement gebildeten Kette zwischen dem Schalter und dem in Vortriebsrichtung weisenden freien Ende des Tiefenanschlages ein ausrückbares Uebertragungselement angeordnet ist. Das Uebertragungselement kann zwischen dem Schaltelement und dem Tiefenanschlag, zwischen dem Schaltelement und dem Schalter, zwischen einem wenigstens zweigeteilten Tiefenanschlag oder wenigstens zweigeteilten Schaltelement angeordnet sein.

Zweckmässigerweise ist das Uebertragungselement zwischen dem Tiefenanschlag und dem Schaltelement angeordnet. Durch das Ausrücken des Uebertragungselementes wird ein axialer Freiraum zwischen dem Schaltelement und dem Schalter geschaffen, so dass eine axiale Versetzung des Tiefenanschlages möglich ist, ohne dass eine Betätigung des Schalters erfolgt.

Vorzugsweise besteht in ausgerückter Stellung des Uebertragungselementes ein axiales Spiel zwischen dem Schalter und dem Schaltelement, das wenigstens dem Schaltweg des Schalters entspricht. Um eine oberflächenbündige Eindrehung einer Schraube gewährleisten zu können, wird die setzrichtungsseitige Stirnseite des Tiefenanschlages nach dem erfolgten Eindrehvorgang gegen die Oberfläche des Aufnahmematerials angestellt und nach dem Abheben des Handschraubgerätes das Schaltelement gegenüber dem Tiefenanschlag entgegen der Setzrichtung um einen Schaltweg versetzt. In dieser Position wird der Tiefenanschlag gegenüber dem Schaltelement mittels einer Klemmverbindung axial festgelegt. Beim Eindrehen einer Schraube gelangt somit zu einem bestimmten Zeitpunkt die setzrichtungsseitige Stirnseite des Tiefenanschlages am Aufnahmematerial zur Anlage. Beim weiteren Eindrehen der Schraube erfolgt eine axiale Versetzung des Tiefenanschlages. Nach dem axialen Versatz des Tiefenanschlags um den Schaltweg wird ein Schalter betätigt, der den Antriebsmotor des Handschraubgerätes abschaltet.

Ist mit dem gleichen Handschraubgerät die zuvor eingedrehte Schraube wieder herauszudrehen bzw. zu lösen, ist dies nicht möglich, weil sich der Tiefenanschlag im gedrückten Zustand befindet und das Schaltelement den Schalter betätigt. Durch das Ausrücken des Uebertragungselementes, wird das Schaltelement von einem Federelement vom Schalter weg gegen den Tiefenanschlag verschoben. In diesem Falle entsteht ein axialer Freiraum zwischen der Stirnseite des Schaltelementes und dem Schalter, wobei der axiale Freiraum wenigstens dem Schaltweg des Schalters entspricht. Der Schalter wird dadurch nicht mehr betätigt, so dass die Schraube herausgedreht bzw. gelöst werden kann, wenn ein am Handschraubgerät angeordneter Links-Rechts-Schalter entsprechend umgestellt worden ist.

Um eine einfach und entsprechend schnelle Ausserfunktionsetzung der Schaltvorrichtung erreichen zu können, ist das Uebertragungselement zweckmässigerweise von aussen betätigbar. Die Betätigung des Uebertragungselementes von aussen kann durch ein axiales oder radiales Versetzen bzw. durch ein Verdrehen des Übertragungselementes in Umfangsrichtung erfolgen.

Vorzugsweise ist das Uebertragungselement als um die Achse des Gehäuses verdrehbarer Ring mit im wesentlichen entlang des Umfanges unterschiedlicher Axialerstreckung ausgebildet. Ein derartiger Ring kann ein Teil des Gehäuses des Handschraubgerätes sein, welches axial versetzbar ist. Der Ring weist im, entgegen der Setzrichtung angeordneten, stirnseitigen Bereich eine unterschiedliche Axialerstreckung auf, die teilweise mit dem setzrichtungsseitigen Bereich des Schaltelementes zusammenwirkt. Durch das Verdrehen des Ringes in Umfangsrichtung ist dieser in wenigstens zwei verschiedene Positionen bringbar, wobei in einer ersten Position die Schaltvorrichtung aktiv ist. Das bedeutet, dass der Tiefenanschlag nur um den Schaltweg des Schalters verschoben werden muss, um den Schalter zu betätigen. In der zweiten Position entsteht ein axialer Freiraum zwischen dem Schalter und dem Schaltelement. Durch das Federelement, das im Bereich zwischen dem Schalter und dem Schaltelement angeordnet ist, wird das Schaltelement gegen den Ring und der Ring gegen den Tiefenanschlag gedrückt, so dass der Freiraum sich zwischen dem Schalter und dem Schaltelement bildet. Der axiale Freiraum entspricht dabei wenigstens dem Schaltweg des Schalters.

Vorzugsweise ist die dem Schaltelement zugewandte Stirnseite des Ringes als Steuerkurve ausgebildet. Damit das Verdrehen des Ringes in die spielfreie Position einwandfrei gewährleistet ist, befinden sich im stirnseitigen Bereich des Ringes zwischen den einzelnen Axialerstreckungen entsprechende Kurven oder Schrägen, die ein Aufheben des axialen Freiraumes zwischen dem Schalter und dem Schaltelement beim Verdrehen des Ringes bewirken.

Zweckmässigerweise ist der Tiefenanschlag mittels eines Klemmringes auf einer axial versetzbaren, sich am Uebertragungselement abstützenden Anschlaghülse aufsteckbar und in jeder beliebigen Position am Umfang der Anschlaghülse festlegbar. Auf die auf der setzrichtungsseitigen Vorderseite des Handschraubgerätes angeordnete, axial versetzbare Anschlaghülse ist ein Klemmring aufschiebbar, der einerseits den Tiefenanschlag aufnimmt, andererseits um 360° um die Anschlaghülse verdrehbar ist. Mittels eines Exzenterspannhebels ist der Klemmring an der Anschlaghülse axial sowie in Umfangsrichtung festlegbar.

Vorzugsweise ist der Tiefenanschlag gegenüber dem Klemmring axial stufenlos einstellbar und mittels Klemmhebel festlegbar. Der sich in der ersten Klemmposition befindliche Exzenterklemmhebel legt den Klemmring an der Anschlaghülse fest und gewährleistet eine stufenlose axiale Verschiebung des Tiefenanschlages. In dieser Stellung des Klemmhebels kann der Tiefenanschlag gegenüber dem Schaltelement in die entsprechende Schaltposition gebracht werden. Durch das Umlegen des Exzenterklemmhebels von der ersten Klemmposition in die zweite Klemmposition wird auch der Tiefenanschlag gegenüber dem Klemmring und somit gegenüber der Anschlaghülse axial festgelegt.

Die Erfindung wird anhand eines Ausführungsbeispieles näher erläutert. Es zeigen:
- Fig. 1: ein erfindungsgemässes Handschraubgerät, schematisch dargestellt;
- Fig. 2: den werkzeugseitigen Bereich des Handschraubgerätes gemäss Fig. 1, vergrössert dargestellt und teilweise geschnitten;
- Fig. 3: eine vergrösserte Darstellung eines Schaltringes in Verbindung mit einem Schaltelement des Handschraubgerätes gemäss den Fig. 1 und 2.

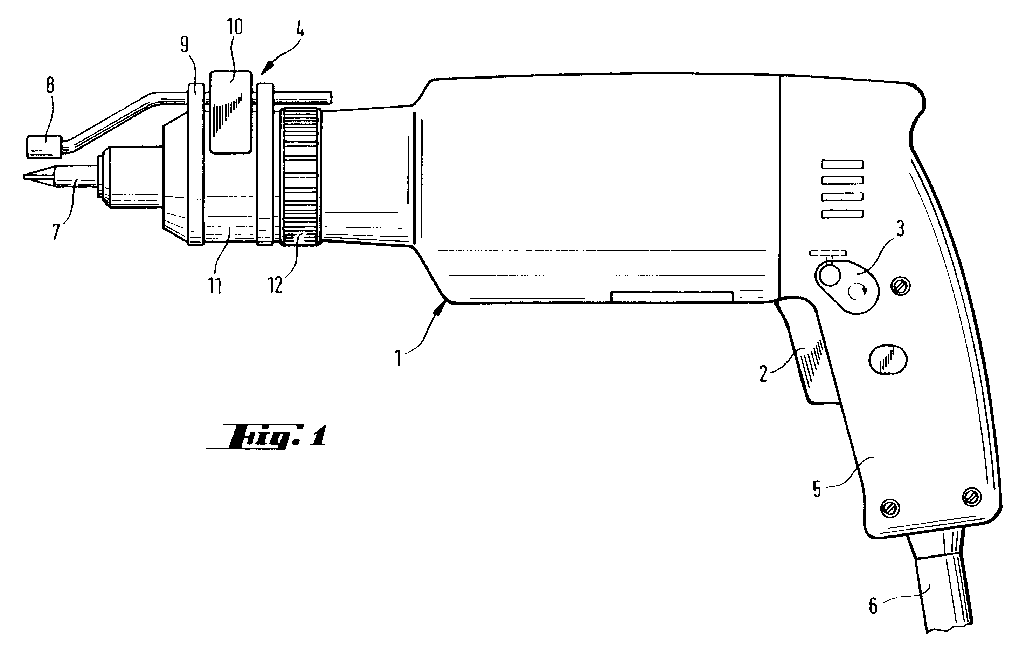

Die Fig. 1 zeigt ein elektrisch angetriebenes Handschraubgerät zum Eindrehen von nicht dargestellten Schrauben in ebenfalls nicht dargestellte, entsprechende Aufnahmematerialien. Das Handschraubgerät besteht im wesentlichen aus einem Gehäuse 1, einem nicht dargestellten elektrischen Antriebsmotor, einem Betätigungsschalter 2 für die Inbetriebnahme des elektrischen Antriebsmotors, einem Links-Rechts-Schalter 3 zur Aenderung der Drehrichtung eines Arbeitswerkzeuges 7 und einer Abschaltvorrichtung 4. Aus dem Handgriff 5 des Gehäuses 1 ragt eine elektrische Verbindungsleitung 6, die den elektrischen Antriebsmotor mit einer externen Stromquelle verbindet.

Die Abschaltvorrichtung 4 ist im wesentlichen im werkzeugseitigen Bereich des Gehäuses 1 angeordnet.

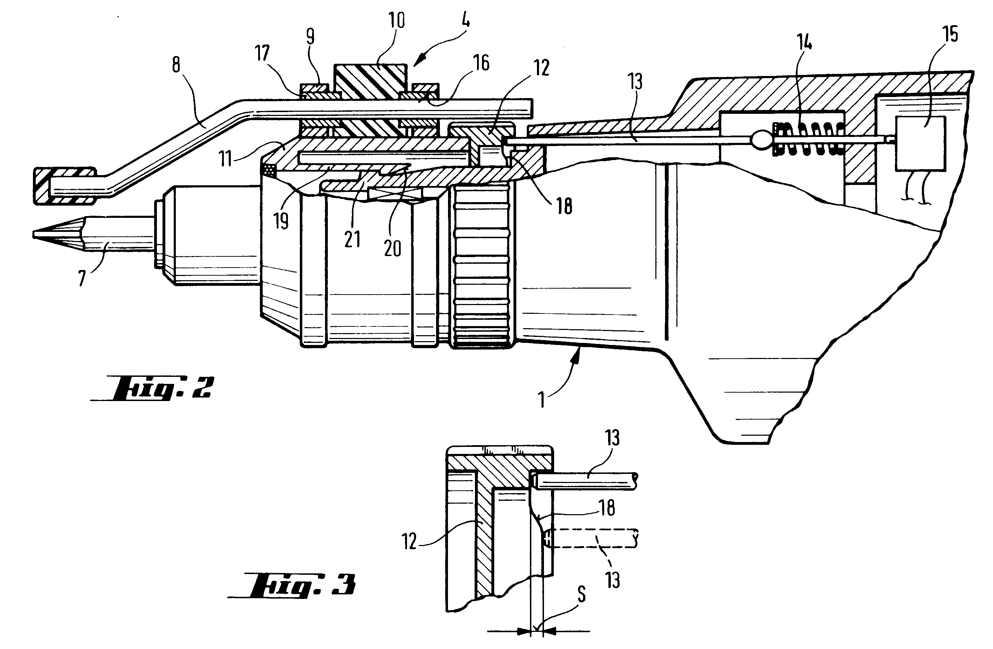

Die Fig. 2 zeigt deutlich ein im werkzeugseitigen Bereich des Handschraubgerätes eingesetztes Arbeitswerkzeug 7 in Form eines Bits für Kreuzschlitzschrauben. Die Schaltvorrichtung 4 setzt sich aus einem Tiefenanschlag 8 einem Klemmring 9, einem Klemmhebel 10, einer axial versetzbaren Anschlaghülse 11, einem axial versetzbaren Uebertragungselement 12, einem axial versetzbaren Schaltelement 13, einem Federelement 14 und einem Schalter 15 zusammen. Die auf der Vorderseite des Handschraubgerätes angeordnete Anschlaghülse 11 ist gegenüber dem Gehäuse 1 des Handschraubgerätes axial versetzbar. Diese Anschlaghülse 11 ist umgeben von einem Klemmring 9, der axial verlaufende Durchtrittsöffnungen 16 aufweist, in denen Führungsbüchsen 17 angeordnet sind, die der axialen Lagerung und Führung des Tiefenanschlages 8 dienen. Diese Führungsbüchsen 17 dienen ebenfalls der Führung und Zentrierung des Klemmhebels 10, der in wenigstens zwei unterschiedliche Klemmpositionen bringbar ist. In einer ersten, nicht dargestellten Klemmposition, wird der auf der Anschlaghülse 11 axial versetzbare und in Umfangsrichtung um 360° verdrehbare Klemmring 9 axial und in Umfangsrichtung festgelegt. Bei einer zweiten, ebenfalls nicht dargestellten Klemmposition wird der Tiefenanschlag 8 gegenüber dem Klemmring 9 und somit auch gegenüber der Anschlaghülse 11 festgelegt.

Wie die Fig. 3 zeigt, ist zwischen der Anschlaghülse 11 und dem Schaltelement 13 ein wenigstens teilweise in Umfangsrichtung verdrehbares Uebertragungselement 12 angeordnet. Dieses Uebertragungselement 12 besteht aus einem, von aussen betätigbaren, axial versetzbaren Ring, dessen Stirnseiten sich jeweils mit den Stirnseiten von Anschlaghülse 11 und Schaltelement 13 in Kontakt befinden. Das Uebertragungselement 12 weist in dem entgegen der Setzrichtung angeordneten stirnseitigen Bereich unterschiedlich hohe Steuerkurven 18 auf. Der axiale Abstand S beider Steuerkurven voneinander entspricht wenigstens dem Schaltweg des Schalters 15.

Aus den Figuren ist weiters ersichtlich, dass das Uebertragungselement 12 im wesentlichen in zwei verschiedenen Positionen festlegbar ist, so dass zwei unterschiedlich grosse, axiale Verschiebungen der Anschlaghülse 11 bzw. des Tiefenanschlages 8 möglich sind. Da das Schaltelement 13 über ein Federelement 14, welches im Bereich des Schalters 15 innerhalb des Gehäuses 1 angeordnet ist, jeweils axial in Setzrichtung verschoben wird, entfernt sich der zum Schalter 15 gewandte stirnseitige Bereich des Schaltelementes 13 umso mehr von dem Schalter 15, je kleiner die axiale Erstreckung des Uebertragungselementes 12 ist. Das bedeutet, dass erst nach einer grösseren axialen Verschiebung des Tiefenanschlages 8 das Schaltelement 13 mit dem Schalter 15 in Berührung kommt und diesen betätigt. Befindet sich das Uebertragungselement 12 in jener Position, in der es die grösste axiale Erstreckung aufweist, so bedarf es bei entsprechender Einstellung des Tiefenanschlages 8 nur der axialen Verschiebung um den Schaltweg, um den Schalter 15 zu betätigen.

Beim Eindrehen von Schrauben in entsprechende Aufnahmematerialien wird der Tiefenanschlag 8 normalerweise derart eingestellt, dass der Schalter 15 beim axialen Verschieben des Tiefenanschlages 8 nur um den Schaltweg des Schalters 15 betätigt wird um somit die Stromzufuhr zum Antriebsmotor zu unterbrechen.

Die Anschlaghülse 11 ist auf den vorderseitigen Teil des Gehäuses 1 aufschiebbar und weist im Innern radial versetzbare Festhalteelemente 19 auf. Beim Aufstecken einer derartigen Anschlaghülse 11 auf das vordere Teil des Gehäuses 1 werden diese radial versetzbaren Festhalteelemente 19 über eine entsprechende Einlaufschräge 20 radial am vorderseitigen Teil des Gehäuses 1 nach innen gedrückt, um nach Ueberwindung eines entsprechenden radialen Vorsprungs 21 wieder radial nach aussen in die Grundstellung rücken zu können.

Der im wesentlichen im Gehäuse 1 angeordnete Schalter 15 ist entweder direkt mit dem nicht dargestellten elektrischen Antriebsmotor verbunden oder er steht in Verbindung mit dem Betätigungsschaiter 2 bzw. mit dem Links-Rechtsschalter 3.

## Patentansprüche

1. Handschraub- und/oder Handbohrgerät mit einem Gehäuse (1), in dem ein Antriebsmotor für ein Arbeitswerkzeug (7) wie Schraubwerkzeug oder Bohrer angeordnet ist und mit einer am Gehäuse (1) angeordneten Schaltvorrichtung (4) für einen das Abschalten des Antriebsmotors bewirkenden Schalter (15), die einen axial versetzbaren Tiefenanschlag (8), ein vom Tiefenanschlag (8) axial verschiebbares, mit dem Schalter (15) zusammenwirkendes Schaltelement (13) und ein den Tiefenanschlag (8) und das Schaltelement (13) in die Grundstellung drückendes Federelement (14) aufweist, **dadurch gekennzeichnet,** dass in der von Tiefenanschlag (8) und Schaltelement (13) gebildeten Kette zwischen dem Schalter (15) und dem in Vortriebsrichtung weisenden freien Ende des Tiefenanschlages ein ausrückbares Uebertragungselement (12) angeordnet ist.

2. Gerät nach Anspruch 1, dadurch gekennzeichnet, dass das Uebertragungselement (12) zwischen dem Tiefenanschlag (8) und dem Schaltelement (13) angeordnet ist.

3. Gerät nach Anspruch 1, dadurch gekennzeichnet, dass in ausgerückter Stellung des Uebertragungselementes (12) ein axiales Spiel zwischen dem Schalter (15) und dem Schaltelement (13) besteht, das wenigstens dem Schaltweg des Schalters (15) entspricht.

4. Gerät nach Anspruch 1 oder 2, dadurch gekennzeichnet, dass das Uebertragungselement (12) von aussen betätigbar ist.

5. Gerät nach einem der Ansprüche 1 bis 3, dadurch gekennzeichnet, dass das Uebertragungselement (12) als um die Achse des Gehäuses (1) verdrehbarer Ring mit im wesentlichen entlang des Umfanges unterschiedlicher Axialerstreckung ausgebildet ist.

6. Gerät nach Anspruch 4, dadurch gekennzeichnet, dass die dem Schaltelement (13) zugewandte Stirnseite des Ringes als Steuerkurve (18) ausgebildet ist.

7. Gerät nach einem der Ansprüche 1 bis 5, dadurch gekennzeichnet, dass der Tiefenanschlag (8) mittels eines Klemmringes (9) auf einer axial versetzbaren, sich am Uebertragungselement (12) abstützenden Anschlaghülse (11) aufsteckbar und in jeder beliebigen Position am Umfang der Anschlaghülse (11) festlegbar ist.

8. Gerät nach Anspruch 6, dadurch gekennzeichnet, dass der Tiefenanschlag (8) gegenüber dem Klemmring (9) stufenlos einstellbar und mittels Klemmhebel (10) axial festlegbar ist.

## Claims

1. Handheld screwdriving and/or drilling apparatus, comprising a housing (1) which accommodates a drive motor for an operational tool (7), for example a screwdriver or drill, and with a switch arrangement (4) on the housing (1) for a switch (15) which switches the drive motor off, and which comprises an axially displaceable depth stop (8), a switch element (13) which is axially displaceable by the depth stop (8) and which co-acts with the switch (15), and a spring element (14) which pushes the depth stop (8) and the switch element (13) into an initial position, **characterized in that** a disengageable transfer element (12) is placed in the chain, which is established by the depth stop (8) and the switch element (13), between the switch (15) and the free end of the depth stop which is oriented in the forward drive direction.

2. An apparatus according to claim 1, **characterized in that** the transfer element (12) is positioned between the depth stop (8) and the switch element (13).

3. An apparatus according to claim 1, **characterized in that** when the transfer element (12) is in its disengaged position, there is an axial play between the switch (15) and the switch element (13) which corresponds at least with the switch path of the switch (15).

4. An apparatus according to claim 1 or 2, **characterized in that** the transfer element (12) is operated from the outside.

5. An apparatus according to one of claims 1 to 3, **characterized in that** the transfer element (12) is structured as a ring which is rotatable around the axis of the housing (1) and of essentially peripherally varying axial extent.

6. An apparatus according to claim 4, **characterized in that** the end of the ring facing towards the switch element (13) is designed as a control curve (18).

7. An apparatus according to one of claims 1 to 5, **characterized in that** the depth stop (8) is pushed by way of a clamping ring (9) onto an axially displaceable abutment sleeve (11) which is supported against the transfer element (12), and that it can be fixed in any peripheral position on the abutment sleeve (11).

8. An apparatus according to claim 6, **characterized in that** the depth stop (8) can be infinitely variably set relative to the clamping ring (9) and axially fixed by means of a wedge lever (10).

## Revendications

1. Visseuse et/ou perceuse à main, comprenant un carter (1) qui abrite un moteur d'entraînement pour un outil de travail (7) tel qu'un outil de vissage ou un foret, et un dispositif de commutation (4) monté sur le carter (1), pour un interrupteur (15) provoquant l'arrêt du moteur d'entraînement, qui comporte une butée de profondeur (8) déplaçable dans le sens axial, un élément de commutation (13) déplaçable dans le sens axial par la butée de profondeur (8) et coopérant avec l'interrupteur (15), et un élément de ressort (14) lequel pousse la butée de profondeur (8) et l'élément de commutation (13) dans la position de base, **caractérisée en ce** que dans la chaîne formée par la butée de profondeur (8) et l'élément de commutation (13), un élément de transmission (12) débrayable est inséré entre l'interrupteur (15) et l'extrémité de la butée de profondeur orientée dans la direction d'avancement.

2. Appareil selon la revendication 1, caractérisé en ce que l'élément de transmission (12) est disposé entre la butée de profondeur (8) et l'élément de commutation (13).

3. Appareil selon la revendication 1, caractérisé en ce que dans la position débrayée de l'élément de transmission (12), il existe entre l'interrupteur (15) et l'élément de commutation (13) un jeu axial qui correspond au moins à la longueur de course de couplage de l'interrupteur (15).

4. Appareil selon l'une des revendications 1 ou 2, caractérisé en ce que l'élément de transmission (12) peut être actionné de l'extérieur.

5. Appareil selon l'une des revendications 1 à 3, caractérisé en ce que l'élément de transmission (12) est réalisé sous la forme d'une bague pouvant tourner autour de l'axe du carter (1), dont l'extension axiale est variable sensiblement le long de la périphérie.

6. Appareil selon la revendication 4, caractérisé en ce que la surface frontale de la bague tournée vers l'élément de commutation (13) est conformée en came de commande (18).

7. Appareil selon l'une des revendications 1 à 5, caractérisé en ce que la butée de profondeur (8) peut être emboîtée au moyen d'une bague de serrage (9) sur une douille de butée (11) qui prend appui sur l'élément de transmission (12), et bloquée dans n'importe quelle position sur la périphérie de ladite douille de butée (11).

8. Appareil selon la revendication 6, caractérisé en ce que la butée de profondeur (8) peut être réglée en continu par rapport à la bague de serrage (9) et bloquée dans le sens axial au moyen d'un levier de serrage (10).
